(19) Europäisches Patentamt
European Patent Office
Office européen des brevets

(11) **EP 1 800 982 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**03.01.2018 Patentblatt 2018/01**

(45) Hinweis auf die Patenterteilung:
**16.10.2013 Patentblatt 2013/42**

(21) Anmeldenummer: **06024885.3**

(22) Anmeldetag: **01.12.2006**

(51) Int Cl.:
*B60T 8/88* $^{(2006.01)}$   *B60T 13/66* $^{(2006.01)}$
*B60T 17/22* $^{(2006.01)}$

(54) **Verfahren zur Ermittlung der Güte der Abstimmung der Bremsanlagen eines Zugfahrzeugs und eines Anhängefahrzeugs**

Method of determination of the reliability of balancing of the braking systems of a tractor and a trailer

Procédé de détermination de la fiabilité du réglage des systèmes de freinage d'un tracteur et d'une remorque

(84) Benannte Vertragsstaaten:
**DE ES FR GB IT**

(30) Priorität: **21.12.2005 DE 102005061095**

(43) Veröffentlichungstag der Anmeldung:
**27.06.2007 Patentblatt 2007/26**

(73) Patentinhaber: **WABCO GmbH**
**30453 Hannover (DE)**

(72) Erfinder:
• **Risse, Rainer**
**30982 Pattensen-Reden (DE)**
• **Stender, Axel**
**31787 Hameln (DE)**

(56) Entgegenhaltungen:
EP-A- 1 433 681       EP-A1- 0 630 788
EP-A2- 0 697 314      DE-A1- 10 304 243
DE-A1- 19 739 825     US-A- 5 415 466
US-A- 5 892 437       US-B1- 6 273 522

• **"Bosch Kraftfahrtechnisches Taschenbuch", October 2003 (2003-10), Friedr. Vieweg & Sohn Verlag / GWV Fachverlage GmbH, Wiesbaden 25 Ed. ISBN: 3-528-23876-3 * page 878 - page 879 ***

EP 1 800 982 B2

**Beschreibung**

Die Erfindung betrifft ein Verfahren zur Ermittlung der Güte der Abstimmung der Bremsanlagen eines Zugfahrzeugs und eines Anhängefahrzeugs, die miteinander zu einem Fahrzeugzug verbunden sind, gemäß dem Patentanspruch 1.

Bei derartigen Fahrzeugzügen ist es erwünscht, dass bei einer von dem Fahrer in dem Zugfahrzeug ausgelösten Abbremsung das Anhängefahrzeug die gleiche Verzögerung aufbringt wie das Zugfahrzeug. Mit anderen Worten, wenn das Anhängefahrzeug nicht mit dem Zugfahrzeug verbunden wäre, sollte es dennoch die gleiche Verzögerung aufweisen wie das Zugfahrzeug. Hiermit soll das Entstehen unerwünscht hoher Kopplungskräfte in der Kupplung zwischen dem Zugfahrzeug und dem Anhängefahrzeug vermieden werden. Zudem soll ein ungleichmäßiger Verschleiß der Bremsbeläge der beiden Fahrzeuge vermieden werden. Zur Ermittlung der Güte der Abstimmung der Bremsanlagen des Zugfahrzeugs und des Anhängefahrzeugs hat man bisher Messungen an dem Fahrzeugzug auf einem Bremsenprüfstand durchgeführt und gegebenenfalls die Güte der Abstimmung durch geeignete Anpassungsmaßnahmen an der Bremsanlage verbessert.

Die Vermessung der Bremsanlagen des Zugfahrzeugs und des Anhängefahrzeugs auf einem Bremsenprüfstand ist relativ zeitaufwendig und teuer. Zudem ist eine derartige Vermessung bei Anhängefahrzeugen, die mit elektronisch gesteuerten Bremssystemen (EBS) ausgestattet sind, nicht mehr ohne weiteres möglich, da diese gemäß der EG-Richtlinie 98/12/EG über eine integrierte Kompatibilitätsregelung verfügen müssen, das heißt, die in dem EBS vorgesehenen Regelalgorithmen würden das Messergebnis auf dem Bremsenprüfstand verfälschen, da keine statische ALB-Kennlinie vorgesehen ist (ALB = Automatische lastabhängige Bremskraftregelung).

Aus der US 5,892,437 geht ein Bremswarnsystem für Fahrzeuge mit Pneumatikbremsanlage hervor, das verschiedene Faktoren überwacht und einen Hinweis auf Fehler in der Bremsanlage gibt.

Der Erfindung liegt daher die Aufgabe zugrunde, ein Verfahren zur Ermittlung der Güte der Abstimmung der Bremsanlagen eines Zugfahrzeugs und eines Anhängefahrzeugs zu geben, das einem Bediener auf einfache und kostengünstige Weise eine Information über die Güte der Abstimmung gibt. Außerdem soll ein elektronisches System zur Ausführung eines solchen Verfahrens angegeben werden.

Diese Aufgabe wird durch die in den Patentansprüchen 1 und 5 angegebene Erfindung gelöst. Weiterbildungen und vorteilhafte Ausgestaltungen der Erfindung sind in den Unteransprüchen angegeben.

Die Erfindung hat den Vorteil, eine Ermittlung der Güte der Abstimmung der Bremsanlagen eines Zugfahrzeugs und eines Anhängefahrzeugs nur durch Verwendung eines in dem Anhängefahrzeug ohnehin vorgesehenen elektronischen Systems, z.B. des EBS, zu ermöglichen, ohne dass ein Bremsenprüfstand benötigt wird. Erforderlich ist lediglich eine Erweiterung der Funktionalität des elektronischen Systems, z.B. durch Erweiterung der Software. Die Ermittlung der Güte der Abstimmung kann dann im normalen Fahrbetrieb erfolgen.

Die Erfindung hat den weiteren Vorteil, bereits nach kurzem Fahrbetrieb des Fahrzeuges eine Aussage über die Kompatibilität der Bremsanlagen des Zugfahrzeugs und des Anhängefahrzeugs zueinander zu ermöglichen. Dies kann gegebenenfalls auch im laufenden Betrieb des Fahrzeuges per Ferndiagnose, z. B. über eine Telematik-Schnittstelle, geschehen. Hierdurch kann frühzeitig eine nicht ausreichende Abstimmung der Bremsanlagen erkannt werden, insbesondere bevor ein weitergehender Schaden durch Überhitzung oder übermäßigen Verschleiß der Bremsanlage auftritt, und somit frühzeitig eine Wartung des Fahrzeuges sowie eine Verbesserung der Abstimmung der Bremsanlage eingeleitet werden.

Ein weiterer Vorteil der Erfindung besteht darin, dass in dem Fahrzeugzug ein elektronisches System vorgesehen ist, welches während einer Abbremsung einen für die Abbremsung des Fahrzeugzuges maßgeblichen Bremsdruckwert sowie einen dazu korrespondierenden Verzögerungswert des Fahrzeugzuges ermittelt. Bei dem maßgeblichen Bremsdruckwert kann vorteilhaft der für die Ansteuerung der Bremsanlage des Anhängefahrzeuges am Kupplungskopf vorliegende Bremsdruck verwendet werden. Dieser kann vorteilhaft über einen Sensor erfasst werden und als Bremsdruckwert dann elektronisch weiterverarbeitet werden.

Das elektronische System kann je nach Bedarf in dem Zugfahrzeug oder in dem Anhängefahrzeug vorgesehen sein. Es ist auch möglich, in jedem der Fahrzeuge ein elektronisches System vorzusehen. Gemäß einer vorteilhaften Ausgestaltung der Erfindung sind die elektronischen Systeme dann über einen Datenbus zum Datenaustausch miteinander verbunden. Gemäß einer weiteren vorteilhaften Ausgestaltung erfolgt die Ermittlung des Bremsdruckwerts durch das in dem Anhängefahrzeug vorgesehene elektronische System.

Gemäß einer vorteilhaften Ausgestaltung der Erfindung kann das elektronische System als Steuergerät eines z.B. in dem Anhängefahrzeug vorgesehenen EBS ausgebildet sein, d.h. als dessen Elektronikeinheit.

Gemäß der Erfindung wird eine Mehrzahl der bei den Abbremsungen ermittelten Bremsdruckwerte und Verzögerungswerte bzw. daraus berechnete Werte während des Betriebes des Fahrzeugzuges in dem elektronischen System gespeichert. Durch Speicherung einer Mehrzahl von solchen Werten, d. h. nicht nur der Speicherung jeweils des zuletzt erfassten Wertes, kann über einen gewissen Zeitraum die Vorgeschichte der Werte erfasst werden. Hierdurch ist eine statistische Analyse der erfassten und gespeicherten Werte möglich, was den Vorteil hat, dass aussagekräftigere und genauere Ergebnisse für einen hieraus bestimmten Abstimmungsgütewert ermittelt werden können.

Bezüglich der Berechnung und Ausgabe des Abstimmungsgütewertes sind verschiedene Verfahrensweisen vorteilhaft. In einer ersten vorteilhaften Ausgestaltung kann die Ermittlung, Speicherung und Verarbeitung der Bremsdruckwerte und der Verzögerungswerte autark in einem der elektronischen Systeme in dem Fahrzeugzug erfolgen. Die visuelle Darstellung des Abstimmungsgütewerts kann in diesem Fall z. B. auf einem im Armaturenbrett des Zugfahrzeuges vorgesehenen Display erfolgen. Es ist ebenfalls denkbar, bei ermittelten Abstimmungsgütewerten, die außerhalb eines erwünschten Wertebereichs liegen, eine Warnlampe automatisch einzuschalten. Eine weitere Möglichkeit, den Abstimmungsgütewert visuell darzustellen, besteht darin, ein Diagnosegerät an das elektronische System anzuschließen und den Abstimmungsgütewert auszulesen und darzustellen.

In einer vorteilhaften Ausgestaltung erfolgt in einem der elektronischen Systeme des Fahrzeugzuges lediglich eine Ermittlung und Speicherung der Bremsdruckwerte und der Verzögerungswerte. Diese werden dann bei Bedarf, z. B. bei einem Werkstattaufenthalt oder bei einem Spediteur mittels eines Diagnosegeräts oder eines Laptop ausgelesen und sodann in dem Diagnosegerät bzw. dem Laptop derart verarbeitet, dass der Abstimmungsgütewert berechnet und visuell dargestellt wird.

In einer vorteilhaften Ausgestaltung können die bei den Abbremsungen ermittelten Bremsdruckwerte und Verzögerungswerte bzw. daraus berechnete Werte während des Betriebs des Fahrzeugzuges über eine drahtlose Datenverbindung, z. B. eine Telematik-Schnittstelle, an eine zentrale Empfangs- und/oder Auswertestelle übertragen werden. Sofern die zentrale Stelle nur als Empfangsstelle dient, kann es sich beispielsweise um einen mit dem Internet verbundenen Server handeln. Die Auswertung der Daten kann dann beispielsweise von einem mit dem Internet verbundenen Personal Computer durchgeführt werden, der auf die auf dem Server gespeicherten Daten zugreift.

Wie hieraus erkennbar ist, kann die Verarbeitung der Bremsdruckwerte und der Verzögerungswerte zu dem Abstimmungsgütewert an verschiedenen Stellen vorteilhaft durchgeführt werden.

Gemäß einer vorteilhaften Weiterbildung der Erfindung wird bei der Bestimmung der Verzögerungswerte automatisch der Einfluss der Fahrbahnlängsneigung und/oder der Bremswirkung der Dauerbremse kompensiert. Dies hat den Vorteil, dass die ermittelten Verzögerungswerte im wesentlichen lediglich den Einfluss der Betriebsbremse darstellen, d. h. der verschleißbehafteten Reibungsbremse. Hierdurch werden insbesondere zufällige Einflüsse durch Fahrbahnsteigung bzw. -gefälle vermieden. Für die Kompensation des Einflusses der Fahrbahnlängsneigung und der Bremswirkung der Dauerbremse kann das elektronische System beispielsweise von einem Datenbussystem empfangene Informationen verwenden, z. B. von einer Steuerelektronik der Dauerbremse bzw., bezüglich der Fahrbahnlängsneigung, von einem in dem Fahrzeug vorgesehenen Satelliten-Navigationssystem, in welchem Informationen über die Fahrbahnlängsneigung gespeichert sind.

Gemäß einer vorteilhaften Weiterbildung erfolgt die Kompensation des Einflusses der Fahrbahnlängsneigung und der Bremswirkung der Dauerbremse durch das Subtrahieren eines vor Beginn der Abbremsung vorliegenden Verzögerungswerts von einem während der Abbremsung bestimmten Verzögerungswert. Hierdurch wird das erfindungsgemäße Verfahren unabhängig von der Zuführung externer Informationen über die Fahrbahnlängsneigung und die Bremswirkung der Dauerbremse. Zudem werden in vorteilhafter Weise auch weitere zufällige Störeinflüsse kompensiert.

Die Erfindung wird nachfolgend anhand eines Ausführungsbeispiels unter Nennung weiterer Vorteile und unter Verwendung von Zeichnungen näher erläutert:

Es zeigen

Fig. 1        die Bremsanlagen eines Fahrzeugzugs mit einem Zugfahrzeug und einem Anhängefahrzeug und

Fig. 2 bis 4    eine vorteilhafte Ausführungsform des erfindungsgemäßen Verfahrens in schematischer Darstellung.

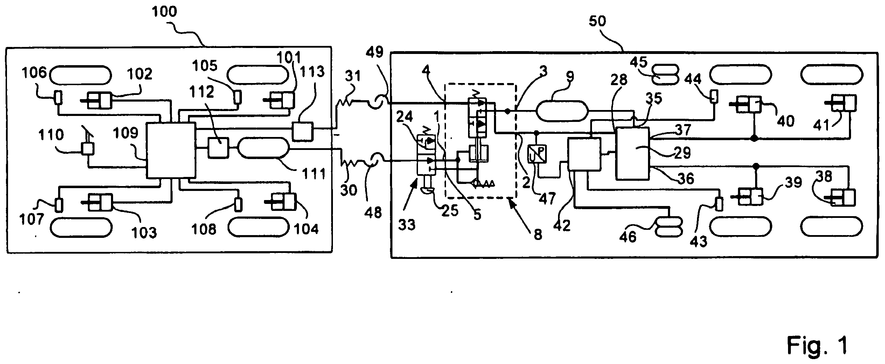

Gemäß Fig. 1 sind die Bremsanlagen eines Zugfahrzeugs (100) und eines Anhängefahrzeugs (50) schematisch dargestellt.

Der Darstellung der Bremsanlage des Anhängefahrzeugs (50) ist die Konfiguration einer Basisvariante für mit einem EBS-System ausgestatteten Anhängefahrzeugen zugrundegelegt, welche aus einem als Sattelauflieger ausgebildeten Zugfahrzeug (100) mit zwei Achsen besteht, es handelt sich hier um ein 2S/2M-System [zwei ABS-Sensoren für zwei Räder und zwei Modulatorkanäle für die Radbremsen der linken bzw. der rechten Seite]; die ABS-Bremsdruckregelung wird also seitenweise durchgeführt.

Das Anhängefahrzeug (50) ist mit dem Zugfahrzeug (100) pneumatisch über zwei Druckschläuche verbunden, nämlich über einen Vorrats-Druckschlauch (30) zur Übertragung des Versorgungsdruckes [am Zugfahrzeug befestigter roter Druckschlauch, der über den "roten Kupplungskopf" (48) des Anhängefahrzeugs angekuppelt ist] und über einen Bremsdruckschlauch (31) zur Übertragung des Bremsdruckes [am Zugfahrzeug befestigte gelber Druckschlauch, der über den "gelben Kupplungskopf" (49) des Anhängefahrzeugs angekuppelt ist]. Auf der Seite des Zugfahrzeuges ist sowohl der rote Druckschlauch als auch der gelbe Druckschlauch pneumatisch an ein Anhängersteuerventil (113) angeschlossen.

Auf der Seite des Anhängefahrzeugs ist der Vorrats-Druckschlauch (30) pneumatisch über ein unten erläutertes, optionales Löseventil (33) mit einem Versorgungsanschluss (1) eines Sicherheitsventils (8) verbunden. Der Bremsdruckschlauch (31) ist über eine Pneumatikleitung mit einem Bremsvorgabeanschluss (4) des Sicherheitsventils (8) verbunden. Das Sicherheitsventil (8) verfügt weiter über einen Behälteranschluss (3), an dem der Vorrats-Druckbehälter (9) für das Anhängefahrzeug angeschlossen ist, und über einen Bremsdruckanschluss (2), an dem der pneumatische Bremsdruck an den pneumatischen Eingang (28) eines pneumatischen Bremsdruckmodulators (29) ausgegeben wird; dieser Bremsdruck stellt für das Anhängefahrzeug mit seiner elektronischen Bremsdruckregelung den pneumatischen Steuerdruck dar.

Das Löseventil (33) dient dazu, ein vom Zugfahrzeug entkoppeltes Anhängefahrzeug zu bewegen, indem die automatische Bremsung durch das Sicherheitsventil (8) außer Kraft gesetzt wird. Dies geschieht dadurch, dass in einer manuell über einen Betätigungsknopf (25) einstellbaren Lösestellung der Druck des Behälters (9) umgelenkt und am Versorgungsanschluss (1) in das Sicherheitsventil (8) eingespeist wird [in Fig. 1 vom Löseanschluss (5) über den Druckkanal (24) zum Versorgungsanschluss (1)]; durch diese Druckumlenkung wird im Sicherheitsventil (8) simuliert, dass am Kupplungskopf für den Vorrats-Druckschlauch Druck anliegt.

Bei dem Anhängefahrzeug mit der elektronischen Bremsdruckregelung wird in allen denkbaren Fällen, in denen eine Bremsung stattfinden soll, am Bremsdruckanschluss (2) ein entsprechender pneumatischer Steuerdruck ausgesteuert. Bei normalen Bremsvorgängen gilt dies, da das Anhängefahrzeug natürlich mit jeder Art von entsprechend zugelassenen Zugfahrzeugen zu koppeln sein muss, sowohl für den Fall, dass das Zugfahrzeug über eine elektronische Bremsregelung verfügt, als auch für den Fall, dass das Zugfahrzeug mit einer konventionellen pneumatischen Bremsanlage ausgerüstet ist. Bei einem Zugfahrzeug mit elektronischer Bremsregelung wird ein Bremsvorgang durch Betätigung des zum Regelsystem gehörenden Bremswertgebers eingeleitet, während dies bei einem konventionellen Zugfahrzeug durch Betätigung des entsprechenden Motorwagen-Bremsventils erfolgt.

Beim Zugfahrzeug mit elektronischer Bremsregelung, bei dem im Normalfall natürlich der von der elektronischen Anhängefahrzeug-Bremsregelung eingestellte Bremsdruck durch das vom Zugfahrzeug über eine elektrische Schnittstelle (32) [ISO 7638/CAN] zum Anhängefahrzeug übertragene elektrische Bremsanforderungs-Signal bestimmt ist, wird der pneumatische Steuerdruck im Anhängefahrzeug im Fehlerfall zum Bremsen herangezogen, wenn nämlich die Zugfahrzeug-Elektronik ausgefallen ist. Bei Verwendung eines konventionell gebremsten Zugfahrzeugs dient der pneumatische Steuerdruck im Anhängefahrzeug zur Bremsung des Anhängefahrzeugs überhaupt, da ein derartiges Zugfahrzeug die elektronische Bremsdruckregelung im Anhängefahrzeug nicht ansprechen kann. Die Umsetzung des pneumatischen Bremssignals in ein elektronisches Signal erfolgt durch einen Drucksensor (47) im Anhängefahrzeug.

Außer diesen normalen Bremsvorgängen wird auch vom Sicherheitsventil (8) ein Vollbremsdruck zum Bremsdruckmodulator (29) durchgesteuert, der eine rein pneumatische Bremsung ohne Zutun der Elektronik erlaubt. Bei Abriss einer der beiden Pneumatikleitungen zwischen Zugfahrzeug und Anhängefahrzeug, oder bei nicht gekuppeltem rotem Kupplungskopf, wird in bekannter Weise durch das Zusammenwirken zwischen Anhängersteuerventil im Zugfahrzeug und Sicherheitsventil eine Zwangsbremsung mittels des Behälterdruckes ausgelöst, indem, wie unten erläutert, in diesem Fall im Sicherheitsventil (8) der Behälteranschluss (3) pneumatisch mit dem Bremsdruckanschluss (2) verbunden wird.

Zusammenfassend kann gesagt werden, dass in allen Fällen, in denen eine Bremsung des Anhängefahrzeugs erforderlich ist, sei dies eine normale Bremsung oder eine Zwangsbremsung, vom Sicherheitsventil (8) am Bremsdruckanschluss (2) ein Druck, entweder der pneumatische Steuerdruck oder der Behälterdruck ausgegeben wird, welcher dem pneumatischen Bremsdruckmodulator (29) zugeführt wird.

Der Bremsdruckmodulator (29) verfügt weiter über einen Druckversorgungsanschluss (35), der durch eine Pneumatikleitung mit dem Vorrats-Druckbehälter (9) verbunden ist. Der Bremsdruckmodulator (29) wird über elektrische Verbindungen durch ein als Elektronikeinheit (42) ausgebildetes elektronisches System gesteuert.

Der pneumatische Bremsdruckmodulator (29) ist in bekannter Weise als zwei-kanaliges Druckregelmodul aufgebaut. Hierbei ist für beide Kanäle ein gemeinsames 3/2-Magnetventil als Umschaltventil für weitere kanalspezifische Belüftungs- und Entlüftungs-Magnetventile vorgesehen, welche für den Fall der EBS-Bremsdruckregelung mit einer taktenden Betriebsweise Pilot-Bremsdrücke je Kanal aussteuern, die wiederum an Steuereingänge von pro Kanal vorgesehenen Relaisventilen angelegt sind. Die Relaisventil-Arbeitsanschlüsse sind mit den Zylinder-Bremsleitungen (36) für die in Fahrtrichtung auf der linken Fahrzeugseite angeordneten Bremszylinder (38) und (39), bzw. mit den Zylinder-Bremsleitungen (37) für die in Fahrtrichtung auf der rechten Fahrzeugseite angeordneten Bremszylinder (40) und (41) verbunden.

Auf diese Weise wird im Rahmen der EBS-Bremsdruckregelung auch eine beladungsabhängige Bremskraftverteilung zwischen den Fahrzeugachsen vorgenommen. Hierzu ist - es wird von einem luftgefederten Auflieger mit Luftfederbälgen (45) auf der linken und (46) auf der rechten Fahrzeugseite ausgegangen - der Luftfederbalg (46) auf der rechten Seite mit einem Drucksensor versehen, dessen Druckmesswert der Elektronikeinheit (42) zur Verfügung steht. Die Elektronikeinheit (42) modifiziert die ausgesteuerten Bremsdrücke beladungsabhängig unter Verwendung dieses die Beladung des Fahrzeugs repräsentierenden Druckmesswertes.

Die Elektronikeinheit (42) verwendet für die EBS-Bremsdruckregelung auch den Druckmesswert des Drucksensors (47), der den am Bremsdruckanschluss (2) ausgegebenen Bremsdruck des Sicherheitsventils (8) darstellt. Dieser Druckmesswert ist für den Fall eines konventionellen Zugfahrzeuges vorgesehen, bei dem die Elektronikeinheit (42) den elektrischen Druckmesswert als elektrisches Bremsanforderungssignal für die EBS-Bremsdruckregelung benutzt.

Der Vollständigkeit halber sei ergänzt, dass die ABS-Bremsregelung auch durch die Einrichtungen der EBS-Bremsdruckregelung durchgeführt werden kann; hierzu sind entsprechend Fig. 1 am linken Rad des Bremszylinders (39) ein ABS-Sensor (43) und am Rad des rechten Bremszylinders (40) ein ABS-Sensor (44) vorgesehen.

Die Bremsanlage des Zugfahrzeugs (100) weist jeweils einen Bremszylinder (101, 104) zur Betätigung der Bremsen der Hinterachse auf, sowie jeweils einen Bremszylinder (102, 103) zur Betätigung der Bremsen der Vorderachse.

Des weiteren sind zur Sensierung der Drehgeschwindigkeiten der Fahrzeugräder ABS-Sensoren (105, 106, 107, 108) vorgesehen. Die ABS-Sensoren (105, 106, 107, 108) sind über elektrische Leitungen an ein elektrisches Bremssteuersystem (109) angeschlossen. Das elektrische Bremssteuersystem (109) weist eine Elektronik zur Auswertung der Sensorsignale sowie zur Ansteuerung von pneumatischen Ventilen auf, die ebenfalls Bestandteil des Steuersystems (109) sind. Die Ventile des Bremssteuersystems (109) sind über pneumatische Leitungen mit den Bremszylindern (101, 102, 103, 104) verbunden. Die elektronische Steuerung des Bremssteuersystems (109) führt eine automatische Einstellung und Regelung der Bremsdrücke in den Bremszylindern (101, 102, 103, 104) nach Maßgabe eines über einen Bremswertgeber (110) ermittelten Bremsbetätigungswunschs des Fahrers sowie unter Auswertung der Signale der ABS-Sensoren (105, 106, 107, 108) durch. Des weiteren steuert das Bremssteuersystem (109) das Anhängerbremsventil (113) sowie eine Drucklufterzeugungsanlage (112). Die Drucklufterzeugungsanlage (112) weist unter anderem einen Kompressor sowie eine eigene elektronische Steuerung auf, welche die Steuerung des Kompressors je nach Druckluftbedarf derart durchführt, dass in einem an die Drucklufterzeugungsanlage (112) angeschlossenen Druckluftvorratsbehälter (111) jederzeit ein ausreichender Druckluftvorrat gehalten wird. Der Druckluftvorratsbehälter (111) ist über den Bremsdruckschlauch (30) mit dem roten Kupplungskopf (48) verbunden.

Nachfolgend wird davon ausgegangen, dass das im folgenden beschriebene Verfahren zur Ermittlung des Abstimmungsgütewerts in der elektronischen Steuereinrichtung im Anhängefahrzeug (50), d.h. in der Elektronikeinheit (42), ausgeführt wird. Die Elektronikeinheit (42) bestimmt fortlaufend den von dem Zugfahrzeug vorgegebenen Bremsdruck durch Auswertung des Signals des Drucksensors (47). Alternativ kann, sofern vorhanden, auch ein über einen elektronischen Datenbus, z.B. einen CAN-Bus, von dem Zugfahrzeug (100) übertragener Druckwert (Sollwert oder Istwert) verwendet werden. Nachfolgend wird der jeweils ermittelte bzw. verwendete Druckwert mit $P_{ist}$ bezeichnet. Des weiteren ermittelt die Elektronikeinheit (42) fortlaufend den Verzögerungswert des Anhängefahrzeugs durch durch zeitliche Differentiation der Drehgeschwindigkeitssignale der durch die ABS-Sensoren (43, 44) ermittelten Drehgeschwindigkeiten der Räder. Der jeweils aktuell ermittelte Verzögerungswert wird mit $Z_{ist}$ bezeichnet.

Bei einer Abbremsung verarbeitet die Elektronikeinheit (42) die erfassten Werte der Größen $P_{ist}$ und $Z_{ist}$ derart, dass jeder der erfassten Werte in einen von einer Mehrzahl von vorbestimmten Wertebereichen eingeordnet wird und dabei die Häufigkeit des Auftretens von Werten in einem jeweiligen Wertebereich gezählt wird. Auf diese Weise wird für jeder der Größen $P_{ist}$ und $Z_{ist}$ ein Histogramm erstellt. Die Einteilung der Klassen folgt dabei der Überlegung, dass der am gelben Kupplungskopf ausgesteuerte Bremsdruck der Vorgabe einer Sollverzögerung entspricht, der das Anhängefahrzeug folgen soll, d.h. die für das Anhängefahrzeug gemessene Verzögerung $Z_{ist}$ soll im Idealfall der durch die Größe $P_{ist}$ definierten Sollverzögerung entsprechen. Wegen der unterschiedlichen Dimensionen und Wertebereiche der Größen Bremsdruck und Verzögerung kann folgendes grundlegende Prinzip für die Einteilung der Klassen zugrundegelegt werden, welches einer normalen Fahrzeugauslegung entspricht:

| Bremsdruck P (in bar) | Verzögerung Z (in Prozent der theoretisch möglichen Verzögerung) |
| --- | --- |
| 0,7 ... 0,8 | 0 |
| 2,0 | 11 ... 12 |
| 6,5 | 60 ... 65 |

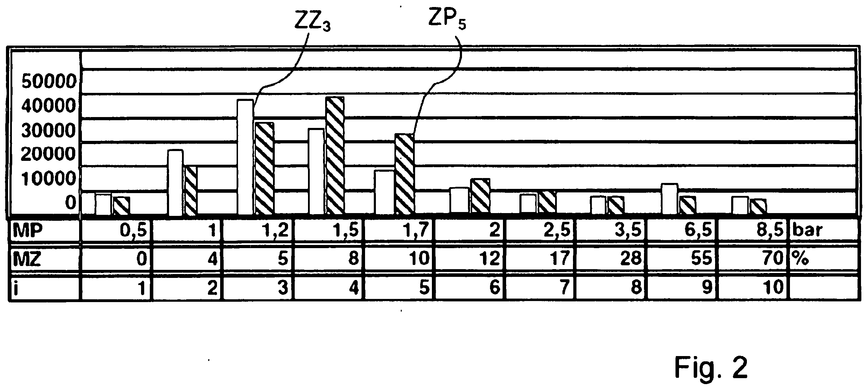

Eine Klassifikation nur in die drei oben genannten Bereiche wäre jedoch in der Praxis zu grob. Als praxistauglich hat sich eine Aufteilung in z. B. 10 Klassen erwiesen. Eine beispielhafte Aufteilung in 10 Klassen ist in der Fig. 2 in der Tabelle unterhalb des Diagramms dargestellt. Die in der Zeile mit der Bezeichnung MP angegebenen Zahlen stellen jeweils die Mittelwerte der Klassen für die Klassifikation der Bremsdruckwerte in der Einheit bar dar. Die mit MZ bezeichnete Zeile gibt die Mittelwerte der Klassen der Verzögerungswerte in Prozent an. In der mit dem Buchstaben i bezeichneten Zeile sind die Klassen der Reihe nach nummeriert.

In der Elektronikeinheit (42) ist für jede der Klassen jeweils ein Zähler $ZZ_i$ für die Zählung der einklassifizierten Verzögerungswerte und ein Zähler $ZP_i$ für die Zählung der einklassifizierten Bremsdruckwerte vorgesehen. Im vorliegenden Beispiel sind somit 20 Zähler vorgesehen. Bei jedem Auftreten eines Bremsdruckwerts bzw. eines Verzögerungswerts in einer der Klassen erhöht die Elektronik den zugehörigen Zähler ($ZZ_i$ bzw. $ZP_i$) um die Zahl 1. In der Fig. 2 ist ein Beispiel für den Status der Zähler nach längerem Fahrbetrieb nach Art eines Balkendiagramms dargestellt. Der jeweils linke Balken in einer Klasse stellt den Zählerwert der Verzögerungswerte $ZZ_i$ dar, der jeweils rechte Balken in einer Klasse stellt den Zählerwert der Bremsdruckwerte $ZP_i$ dar. Beispielhaft sind der Zähler $ZZ_3$ der Klasse 3 (i = 3) der Verzögerungswerte und der Zähler $ZP_5$ der Klasse 5 (i = 5) der Bremsdruckwerte mit entsprechenden Bezugszeichen ($ZZ_3$, $ZP_5$) versehen. Wie erkennbar ist, tendieren die ermittelten Werte der Verzögerung schwerpunktmäßig zur Klasse 3, während die ermittelten Werte für den Bremsdruck etwas höher liegen und schwerpunktmäßig zur Klasse 4 tendieren. Somit liegt bei dem diesem Beispiel zugrundegelegten Fahrzeugzug eine gewissen Verstimmung zwischen den Bremsanlagen des Zugfahrzeugs und des Anhängefahrzeugs vor.

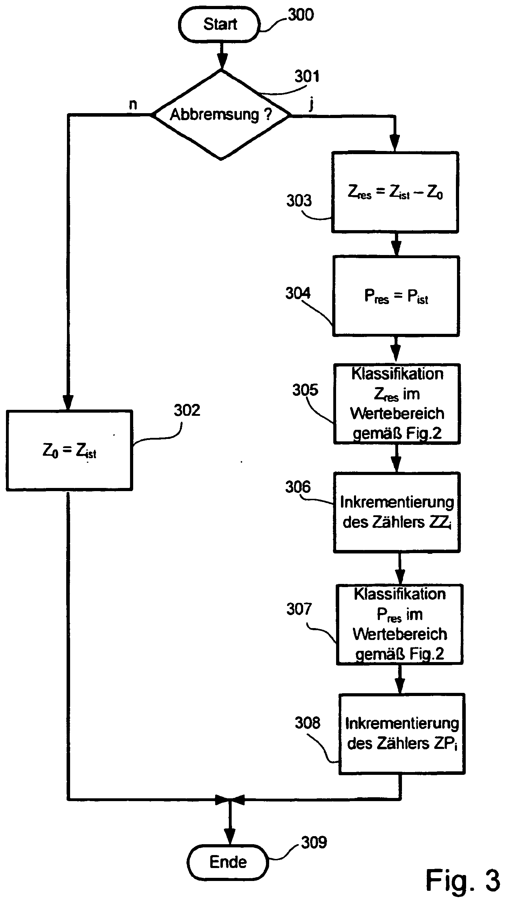

Nachfolgend soll das anhand der Fig. 2 erläuterte Beispiel der Ermittlung der einzelnen Werte-Klassen anhand eines in der Fig. 3 dargestellten Flussdiagramms näher erläutert werden. Fig. 3 zeigt die zur Erstellung des in der Fig. 2 dargestellten Histogramms erforderlichen Verfahrensschritte. Die Verfahrensschritte beginnen mit einem Block (300). An diesen schließt sich ein Entscheidungsblock (301) an, in dem geprüft wird, ob eine Abbremsung vorliegt. Als Kriterium kann z. B. die Betätigung des Bremspedals verwendet werden. Sofern gerade keine Abbremsung durchgeführt wird, wird zu einem Block (302) verzweigt, in dem ein außerhalb einer Abbremsung eventuell auftretender Wert der Istverzögerung ($Z_{ist}$) in einem Speicher ($Z_0$) gespeichert wird. Die Speicherung erfolgt für eine spätere Verwendung zur Kompensation von Einflüssen der Fahrbahnlängsneigung oder der Wirkung einer Dauerbremse, wie eingangs bereits erläutert. Sodann endet das Verfahren in einem Block (309).

Sofern eine Abbremsung vorliegt, wird von dem Block (301) zu einem Block (303) verzweigt. Dort wird die Kompensation der Fahrbahnlängsneigung, der Bremswirkung der Dauerbremse und eventuell vorhandener anderer Störeinflüsse kompensiert, indem ein resultierender Wert für die Verzögerung ($Z_{res}$) als Differenz aus der aktuell vorliegenden Verzögerung ($Z_{ist}$) und dem Verzögerungswert ($Z_0$) gebildet wird. Sodann wird in einem Block (304) der aktuell vorliegende Wert des Bremsdrucks ($P_{ist}$) in einem Speicher ($P_{res}$) gespeichert. Die Ermittlung der Werte ($Z_{res}$, $P_{res}$) erfolgt idealerweise mit möglichst geringem zeitlichem Versatz, damit jeweils zueinander korrespondierende Werte in demselben Abbremsungszustand des Fahrzeugs ermittelt werden.

Es ist auch vorteilhaft, statt der Verwendung einzelner Messwerte für die Größen Bremsdruck und Verzögerung eine Mittelwertbildung bzw. Integration der Messwerte über einen gewissen, kurzen Zeitraum durchzuführen und die Ergebnisse dann zu verwenden. Es ist ebenfalls vorteilhaft, die während einer Bremsung auftretenden Maximalwerte der Größen Bremsdruck und Verzögerung zu ermitteln und diese Ergebnisse dann statt einzelner Messwerte zu verwenden.

Hiernach erfolgt in einem Block (305) eine Klassifikation des Werts ($Z_{res}$) in die in der Fig. 2 dargestellten Klassen. In einem Block (306) wird der zu der ermittelten Klasse gehörende Zähler ($ZZ_i$) inkrementiert. Sodann erfolgt eine Klassifikation des Werts ($P_{res}$) in die in der Fig. 2 dargestellten Klassen. In einem Block (308) wird der zu der ermittelten Klasse gehörende Zählwert ($ZP_i$) inkrementiert. Sodann endet das Verfahren in dem Block (309).

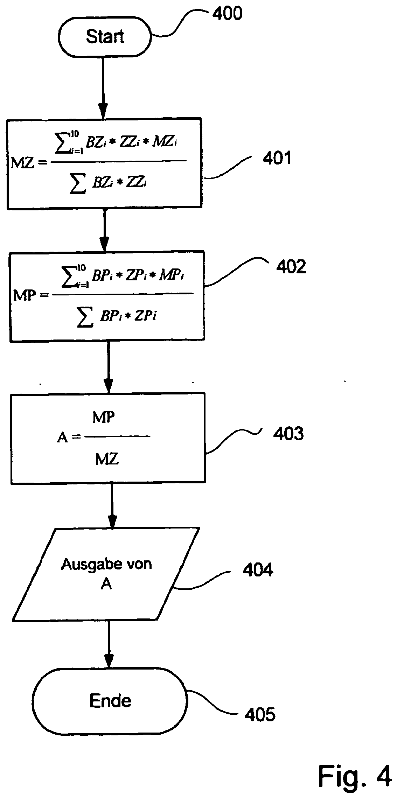

Nach ausreichend häufigem Durchlaufen der Verfahrensschritte gemäß Fig. 3 entsteht das in Fig. 2 als Balkendiagramm dargestellte Histogramm. Eine weitere Auswertung der Histogramm-Daten kann in vorteilhafter Weise gemäß den in der Fig. 4 als Flussdiagramm dargestellten Verfahrensschritten durchgeführt werden. Die Verfahrensschritte beginnen mit einem Block (400).

In einem Block (401) wird zunächst für die Verzögerungswert-Zähler ($ZZ_i$) eine gewichtete Mittelwertbildung sozusagen nach Art der Ermittlung eines Flächenschwerpunkts durchgeführt. Hierbei wird in einer vorteilhaften Ausgestaltung der Erfindung ein gewichteter Mittelwert (MZ) gemäß folgender Formel bestimmt:

$$MZ = \frac{\sum_{i=1}^{10} BZ_i \cdot ZZ_i \cdot MZ_i}{\sum_{i=1}^{10} BZ_i \cdot ZZ_i}$$

Hierbei stellt die Größe $BZ_i$ die Breite einer Klasse i der Verzögerungswert-Klassen dar, die Größe MZi stellt den Mittelwert einer Klasse i der Verzögerungswert-Klassen dar. Sodann wird in analoger Weise in einem Block (402) ein gewichteter Mittelwert für die Bremsdruck-Zähler (ZPi) gemäß folgender Formel bestimmt:

$$MP = \frac{\sum\limits_{i=1}^{10} BP_i \cdot ZP_i \cdot MP_i}{\sum\limits_{i=1}^{10} BP_i \cdot ZP_i}$$

Hierbei stellt die Größe BPi die Breite einer Klasse i der Bremsdruckwert-Klassen dar, die Größe $MP_i$ stellt den Mittelwert einer Klasse i der Bremsdruckwert-Klassen dar. In einem darauffolgenden Block (403) wird ein Abstimmungsgütewert (A) als Quotient aus den zuvor bestimmten Mittelwerten (MP, MZ) gemäß folgender Formel gebildet:

$$A = \frac{MP}{MZ}$$

Schließlich erfolgt in einem Block (404) eine Ausgabe des Abstimmungsgütewerts (A), z. B. visuell auf einem Display eines Diagnosegeräts oder eines Computers.
Das Verfahren endet mit einem Block (405).

**Patentansprüche**

1. Verfahren zur Ermittlung der Güte der Abstimmung der Bremsanlagen eines Zugfahrzeuges (100) und eines Anhängefahrzeuges (50), in Form einer Aussage über die Kompatibilität der Bremsanlagen des Zugfahrzeugs und des Anhängefahrzeugs zueinander, die miteinander zu einem Fahrzeugzug (100, 50) verbunden sind, wobei durch ein in dem Fahrzeugzug (100, 50) vorgesehenes elektronisches System (42) während einer Abbremsung ein für die Abbremsung des Fahrzeugzuges (100, 50) maßgeblicher Bremsdruckwert ($P_{res}$) sowie ein dazu korrespondie-render Verzögerungswert ($Z_{res}$) des Fahrzeugzuges (100, 50) ermittelt wird, eine Mehrzahl der bei Abbremsungen ermittelten Bremsdruckwerte ($P_{res}$) und Verzögerungswerte ($Z_{res}$) bzw. daraus berechnete Werte ($ZZ_i$, $ZP_i$) während des Betriebes des Fahrzeugzuges (100, 50) in dem elektronischen System (42) gespeichert und/oder über eine Telematik-Schnittstelle an eine zentrale Empfangs- und/oder Auswertestelle übertragen werden, und hieraus ein Abstimmungsgütewert (A) bestimmt wird, wobei der Bremsdruckwert ($P_{res}$) und/oder der Verzögerungswert ($Z_{res}$) in Wertebereiche klassifiziert werden, wobei die in den jeweiligen Wertebereich fallenden Werte ($P_{res}$, $Z_{res}$) gezählt werden und ein Mittelwert (MP, MZ) über die Wertebereiche gebildet wird, wobei der Abstimmungsgütewert (A) als Quotient aus dem für die Bremsdruckwerte ($P_{res}$) ermittelten Mittelwert (MP) zu dem für die Verzögerungswerte ($Z_{res}$) ermittelten Mittelwert (MZ) berechnet wird.

2. Verfahren nach Anspruch 1, **dadurch gekennzeichnet, dass** der Abstimmungsgütewert (A) visuell dargestellt wird.

3. Verfahren nach wenigstens einem der Ansprüche 1 oder 2, **dadurch gekennzeichnet, dass** bei der Bestimmung der Verzögerungswerte ($Z_{res}$) automatisch der Einfluss der Fahrbahnlängsneigung und/oder der Bremswirkung der Dauerbremse kompensiert wird.

4. Verfahren nach Anspruch 3, **dadurch gekennzeichnet, dass** die Kompensation durch Subtrahieren eines vor Beginn der Abbremsung vorliegenden Verzögerungswerts ($Z_0$) von einem während der Abbremsung bestimmten Verzögerungswert ($Z_{ist}$) erfolgt.

5. Elektronisches System (42) zur Verwendung in einem Fahrzeugzug (100, 50), der durch ein mit einem Zugfahrzeug (100) verbundenes Anhängefahrzeug (50) gebildet wird, wobei das elektronische System (42) ein Verfahren nach einem der vorhergehenden Ansprüche ausführt.

**Claims**

1. Method for determining the quality of the adjustment of the brake systems of a tractor (100) and a trailer (50) in the form of information about the compatibility of the brake system of the tractor with that of the trailer, which tractor and trailer are connected to form a vehicle combination (100, 50), wherein, by means of an electronic system (42) provided in the vehicle combination (100, 50), a brake pressure value ($P_{res}$) which is decisive for the braking of the vehicle combination (100, 50) and a corresponding deceleration value ($Z_{res}$) of the vehicle combination (100, 50) are determined during a braking process, a multiplicity of the brake pressure values ($P_{res}$) determined during braking processes and deceleration values ($Z_{res}$) or values ($ZZ_i$, $ZP_i$) calculated therefrom are stored in the electronic system (42) while the vehicle combination (100, 50) is operating and/or are transmitted via a telematic interface to a central reception and/or evaluation point and an adjustment quality value (A) is determined therefrom, wherein the brake pressure value ($P_{res}$) and/or the deceleration value ($Z_{res}$) are classified into value ranges, wherein the values ($P_{res}$, $Z_{res}$) which occur in the respective value range are counted and a mean value (MP, MZ) is formed over the value ranges, wherein the adjustment quality value (A) is calculated as a quotient of the mean value (MP) determined for the brake pressure value ($P_{res}$) with respect to the mean value (MZ) determined for the deceleration value ($Z_{res}$) .

2. Method according to Claim 1, **characterized in that** the adjustment quality value (A) is displayed visually.

3. Method according to at least one of Claims 1 and 2, **characterized in that** during the determination of the deceleration value ($Z_{res}$) the influence of the longitudinal inclination of the carriageway and/or the braking effect of the sustained-action brake is compensated for automatically.

4. Method according to Claim 3, **characterized in that** the compensation is carried out by subtracting a deceleration value ($Z_0$) present at the start of the braking from a deceleration value ($Z_{act}$) which is determined during the braking.

5. Electronic system (42) for use in a vehicle combination (100, 50), which is formed by a trailer (50) which is connected to a tractor (100) wherein the electronic system (42) implements a method according to one of the preceding claims.

## Revendications

1. Procédé pour déterminer la qualité de l'accord des installations de freinage d'un véhicule tracteur (100) et d'un véhiculé remorque (50) sous la forme d'une affirmation sur la compatibilité des installations de freinage du véhicule tracteur et du véhicule remorque entre elles, lesquels sont reliés l'un avec l'autre en un train de véhicules (100, 50), une valeur de pression de freinage ($P_{res}$) déterminante pour le freinage du train de véhicules (100, 50) ainsi qu'une valeur de ralentissement ($Z_{res}$) correspondant à celle-ci du train de véhicules (100, 50) étant déterminées par un système électronique (42) présent dans le train de véhicules (100, 50) pendant un freinage, une pluralité de valeurs de pression de freinage ($P_{res}$) et de valeurs de ralentissement ($Z_{res}$) déterminées lors des freinages ou de valeurs ($ZZ_i$, $ZP_i$) calculées à partir de celles-ci étant mises en mémoire dans le système électronique (42) pendant le fonctionnement du train de véhicules (100, 50) et/ou transmises par le biais d'une interface télématique à un poste de réception et/ou d'interprétation central et une valeur de qualité de l'accord (A) étant déterminée à partir de celles-ci, la valeur de pression de freinage ($P_{res}$) et/ou la valeur de ralentissement ($Z_{res}$) étant classifiées en plages de valeurs, les valeurs ($P_{res}$, $Z_{res}$) qui se trouvent dans la plage de valeurs correspondante étant comptées et une valeur moyenne (MP, MZ) sur les plages de valeurs étant formée, la valeur de qualité de l'accord (A) étant calculée en tant que quotient de la valeur moyenne (MP) déterminée pour les valeurs de pression de freinage ($P_{res}$) par la valeur moyenne (MZ) déterminée pour les valeurs de ralentissement ($Z_{res}$)

2. Procédé selon la revendication 1, **caractérisé en ce que** la valeur de qualité de l'accord (A) est représentée visuellement.

3. Procédé selon au moins l'une des revendications 1 ou 2, **caractérisé en ce que** lors de la détermination des valeurs de ralentissement ($Z_{res}$), l'influence de l'inclinaison longitudinale de la chaussée et/ou de l'effet de freinage du frein continu est automatiquement compensée.

4. Procédé selon la revendication 3, **caractérisé en ce que** la compensation est effectuée en soustrayant une valeur de ralentissement ($Z_0$) présente avant le début du freinage d'une valeur de ralentissement ($Z_{ist}$) déterminée pendant le freinage.

5. Système électronique (42) destiné à être utilisé dans un train de véhicules (100, 50) qui est formé par un véhicule remorque (50) relié à un véhicule tracteur (100), le système électronique (42) mettant en oeuvre un procédé selon l'une des revendications précédentes.

Fig. 1

EP 1 800 982 B2

Fig. 2

Start —300

301
n ————— Abbremsung ? ————— j

$Z_{res} = Z_{ist} - Z_0$
303

302
$Z_0 = Z_{ist}$

304
$P_{res} = P_{ist}$

305
Klassifikation $Z_{res}$ im Wertebereich gemäß Fig.2

306
Inkrementierung des Zählers $ZZ_i$

307
Klassifikation $P_{res}$ im Wertebereich gemäß Fig.2

308
Inkrementierung des Zählers $ZP_i$

Ende —309

Fig. 3

EP 1 800 982 B2

Start — 400

$$MZ = \frac{\sum_{i=1}^{10} BZ_i * ZZ_i * MZ_i}{\sum BZ_i * ZZ_i}$$ — 401

$$MP = \frac{\sum_{i=1}^{10} BP_i * ZP_i * MP_i}{\sum BP_i * ZP_i}$$ — 402

$$A = \frac{MP}{MZ}$$ — 403

Ausgabe von A — 404

Ende — 405

Fig. 4

12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5892437 A